(19) Europäisches Patentamt / European Patent Office / Office européen des brevets

(11) **EP 3 579 703 B1**

(12) **EUROPEAN PATENT SPECIFICATION**

(45) Date of publication and mention
of the grant of the patent:
**27.01.2021 Bulletin 2021/04**

(21) Application number: **18707774.8**

(22) Date of filing: **08.02.2018**

(51) Int Cl.:
*A23K 10/30* (2016.01)      *A23K 10/33* (2016.01)
*A23K 20/163* (2016.01)      *A23K 40/10* (2016.01)
*A23K 40/20* (2016.01)

(86) International application number:
**PCT/NL2018/050090**

(87) International publication number:
**WO 2018/147737 (16.08.2018 Gazette 2018/33)**

(54) **PELLETING PROCESS FOR MAKING AN ANIMAL FEED PELLET**

PELLETIERVERFAHREN ZUR HERSTELLUNG VON TIERFUTTERPELLETS

PROCÉDÉ DE PELLETISATION POUR LA FABRICATION DE GRANULÉS D'ALIMENT POUR ANIMAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2017 NL 2018355**

(43) Date of publication of application:
**18.12.2019 Bulletin 2019/51**

(73) Proprietor: **Forfarmers Corporate Services B.V.
7241 CW Lochem (NL)**

(72) Inventors:
• **MARCHAL, Johannes Leonardus Maria
7232 HC Warnsveld (NL)**
• **GAASENBEEK E/V GRAS, Annemieke Claziena
7943 TD Meppel (NL)**
• **VISSCHERS, Jan
7242 MA Lochem (NL)**

(74) Representative: **EP&C
P.O. Box 3241
2280 GE Rijswijk (NL)**

(56) References cited:
**EP-A2- 0 120 573          US-A- 3 420 671
US-A1- 2009 297 664**

**Description**

**FIELD OF THE INVENTION**

The present invention relates to the field of agriculture, food industry, animal feed pellet and pelleting processes. Particularly, the present invention relates to a pelleting process for the production of animal feed pellets having both increased nutritional values and increased or high durability or hardness characteristics.

**BACKGROUND OF THE INVENTION**

Animal feed pellets essentially consist of a mixture of raw feed material (e.g. grains, cereals, legumes, roughage, meat meal, fish meal, bone meal, by-process products, oil, fat, fillers or any mixture thereof, etc.), minerals, vitamins and trace elements. Animal feed pellets vary in their composition as well as structural properties (e.g. hardness, density, durability, shape, size, etc) depending on the nutritional needs, eating habits, digestive system (monogastric system, ruminant digestive system, etc) and habitat (e.g., aquatic, terrestrial, domestic, etc) of the animal for which the feed pellet is intended. It is commonly agreed in the field of agriculture and animal nutrition that animals (e.g. livestock animals like beef, cows, pigs and poultry) benefit more or make better gains (e.g. weight gain, increased height, enhanced growth curve) on pelleted feed than a meal ration because pelleted feed is in a more concentrated, readily edible and palatable form than meal or mash ration. Pelleted feed eases food intake and minimizes feed waste during the eating process. It was shown that most animals, if given the choice between the same feed in a pellet or a mash form will prefer the pellet form.

Therefore, it is not surprising that the animal feed pellet industry has become one of the largest industry worldwide. Animal feed pellets are typically produced on an industrial scale according to two main processes, namely a pelleting process and an extrusion process.

US20091297664 discloses a method and composition for low temperature forming of starch based and/or protein based feeds. US3420671 discloses a compressed animal feed of subdivided forage and a binder produced by subjecting starchy material to enzyme treatment and cooking at elevated temperature and pressure. EP0120573 discloses a starch-rich meal which is subjected to hydrolysis by a heat-stable alpha-amylase enzyme capable of hydrolyzing starch to dextrins having a degree of polymerisation in the range of 4 to 10, the hydrolysis being conducted at high solids content.

The process of pelleting in its simplest form can be described according to three main steps including: 1) grinding or milling starting ingredients (e.g. grains, legumes etc), 2) mixing all the starting ingredients with a sufficient amount water to obtain a mash mixture, and 3) subjecting the mash mixture to a pelleting machine to obtain pellets. Pelletizing is essentially a process of compaction, where the mash is compressed with the goal of achieving a certain pellet quality in terms of hardness, density, and durability. However, it is notoriously difficult to obtain pellets having a desired hardness or durability through pelleting, particularly when varying the starting ingredients because the process itself offers little control or flexibility beyond compressing the starting feed ingredients.

Feed pellets having good durability or hardness characteristics (i.e. will not break in pieces easily at any stage of production or transport or storage in bags or bins, also over time) are desired so as to prevent or reduce the occurrence of fines or crumbles during the manufacturing process, transport, storage and handling of the pellets by the customers. Animal feed pellets having low or inadequate hardness or durability are prone to breakage during manufacturing, transport, storage and/or handling. This causes the formation of fines or crumbles. Although fines can be recycled during the manufacturing process, the recycling of fines is expensive and decreases the nutritive value of the feed pellets because of overprocessing. From a customer standpoint, the occurrence of fines or crumbles is undesirable because animals cannot utilize or eat fines or crumbles efficiently, which not only causes feed and money waist but also deter customers from purchasing the feed pellets again.

Over the years, several strategies aimed at reducing or overcoming the issues of fines in relation to pellets lacking hardness or durability characteristics have been developed. For instance, one strategy consists of incorporate binding agent(s) or hardening agent(s) into the pellet composition to increase durability or hardness characteristics of the pellets. Examples of commonly used binders include sodium or calcium bentonite, collagen protein derivatives, molasses (e.g. cane, sugar beet, or wood molasses), natural gums and fatty acids, spray dried calcium lignosulfonates, cellulose gums, hemicellulose extract, lignin (e.g. lignin sulfonates), and others. While providing or improving the hardness or durability characteristics of feed pellets, the use of such binders is not optimal. For example, the use of ligninsulfonates or wood molasses are unpalatable to some animals. Further, while ligninsulfonate has no nutritional value, molasses in general can be unhealthy because they contribute an excess of minerals (e.g. potassium) to the pellet composition. Overall, the use of binders (e.g. ligninsulfonates or molasses) decreases the nutritional value of the animal feed to which they are added. Other limitations associated with the use of binders is their high cost and tendency to increase the complexity of the pelleting process since these binders must be added to the feed in a specific manner and thus more precautions or steps need to be implemented in the overall process, which contributes to make the pelleting process time-consuming and cost-ineffective.

Another strategy consists of incorporating a so-called "conditioning step" into the process of pelleting. The conditioning step consists of subjecting the mash mixture of feed ingredients to water and steam or heat, typically at temperatures ranging between 70-80 °C, and mild pressure of about 1 MPa for a duration of about 1-20 minutes prior to their introduction into the pelleting device. The rational for adding water, steam or heat during the conditioning is to improve production rates, reduced die wear, and improved pellet quality in terms of durability or hardness characteristics. Although improved, the pelleting process comprising conditioning is still not optimal with respect to producing pellets meeting the industrial standards of quality for hardness or durability. Conditioning may also be used in combination with one or more binding agents, for instance molasses.

This problem has been tackled by introducing harsher conditioning treatment, where the ingredients (i.e. mash) are mixed, cooked, steamed, sheared, gelatinized, and formed into pellets via an extruder, rather than simply compacted and chopped into pellets in a pelletizing process. Such process is commonly referred to as an extruding process. Compared to the pelleting process described above, the extrusion process is relatively more aggressive in nature as it uses higher temperatures (e.g. 135 - 140 °C) and pressure conditions (e.g. up to 25 MPa) over a shorter exposure time (e.g. 1-10 seconds). It also uses mechanical conditioning where high shear forces are applied to the mash by pushing the mash to an extruder equipped with screws.

Feed pellet compositions comprising high level of starch-containing ingredients such as grains (e.g. wheat corn, milo, rice, barley, rye, oats and others) that are subjected to an extruding process yield pellets of better quality (i.e. meet the industrial standard for hardness, density and durability) than pellets having the same composition (i.e. high starch) but obtained through milder conditioning conditions. This is because the harsher conditioning treatment (higher temperature over a short period of time) causes the starch to gelatinize within the mash, which in turns helps binding the remainder of the ingredients together. Further, the high temperature, pressure and shear force contribute to mix, link and compress all ingredients. Hence, harder and durable pellets are achieved. This is one of the reasons why extruding processes using harsher conditioning treatment such as described above are widely used or favoured over pelleting processes or process using milder conditioning treatment in the animal feed industry. Such conditioning process may also be used in combination with one or more binding agents such as molasses.

Although advantageous for the reasons mentioned above, processes using harsh conditioning treatment may be associated with negative effects including destruction of temperature-sensitive vitamins and supplements (e.g. vitamins A, C, B1, pigments, etc), inactivation of beneficial enzymes (e.g. amylase, phytase), destruction of amino acids (e.g. lysine) or denaturation of proteins, formation of undesirable substances (e.g. Maillard reaction by-products), overall reduction of the nutritional value or quality of the feed pellets, overall increased complexity of the manufacturing process and increased costs as well as over processing of feed pellets. Feed pellets generated via such process are less suitable for animals that cannot effectively digest high quantities of highly processed or cooked feed (e.g. high level of gelatinized starch). Further, customers who desire healthier, more natural, less processed or over-processed animal feed pellets are left with little choices or options on the market.

Therefore, there is a need for pelleting processes which are devoid of at least one of the limitations mentioned above. Particularly, there is a need for pelleting processes which allow the production of animal feed pellets having increased or higher nutritional value compared to pellets obtained by traditional processes, and which are endowed with hardness or durability characteristics that meet or exceed the industry standards for animal feed pellet quality. There is a need for pelleting processes which are better-suited and/or simpler for producing animal feed pellet comprising ingredients containing starch or rich in starch (e.g. grains).

**SUMMARY OF THE INVENTION**

The scope of protection is strictly defined in the appended set of claims. The present invention relates to a pelleting process for making an animal feed pellet, said process comprising the steps of:

> a) providing a first feed fraction and a second feed fraction;
> b) milling the first feed fraction;
> c) adding water to the milled first feed fraction of step (b) to obtain a slurry;
> d) optionally, adding one or more enzymes to the slurry of step (c) to at least partially degrade or hydrolyse non-starch polysaccharides contained in said milled first feed fraction;
> e) heating the slurry of step (c) or (d) under conditions sufficient to allow the starch to gelatinize;
> f) milling the second feed fraction;
> g) optionally, adding one or more aqueous liquids and/or applying steam to the milled second feed fraction of step (f) to obtain a feed mash;
> h) optionally, heating the fraction of step (f) or the mash of step (g) under conditions insufficient to gelatinize starch or denature proteins comprised in the fraction or mash;

i) mixing the slurry of step (e) with the fraction or mash of step (f), (g) or (h) to obtain a feed pellet mixture;

j) optionally, heating the feed pellet mixture of step (i) under conditions insufficient to gelatinize starch or denature proteins comprised in the mixture; and

k) subjecting the feed pellet mixture of step (i) or (j) to a pelleting device to form an animal feed pellet, wherein optionally the feed pellet mixture of step (i) or (j) is heated under conditions insufficient to gelatinize starch or denature proteins comprised in the feed pellet mixture in the pelleting device;

l) optionally, cooling the feed pellet of step (k);

m) optionally, drying the feed pellet of step (k) and/or (l);

wherein at least steps (c) to (e) are carried out independently of steps (g) to (h), and which is as set out in claim 1.

In an embodiment, the first feed fraction may comprise one or more starch-containing sources.

In an embodiment, the starch-containing sources may be selected from wheat, corn, milo, rice, barley, soya, rye, spelt, oats, sorghum, potato, tapioca, tuber, legumes, cotton seed meal, flax seed meal and any mixtures thereof.

In an embodiment, the second feed fraction may comprise one or more feed ingredients from an animal source or a plant source.

In an embodiment, the one or more feed ingredients from the plant source may be selected from wheat, corn, milo, rice, beets, barley, soya, rye, spelt, oats, sorghum, legumes, cotton seed meal, flax seed meal and mixtures thereof.

In an embodiment, the one or more feed ingredients from the animal source may be selected from meat, meat meal, bone meal, fish meal, insects, insect meal, and any mixtures thereof.

In an embodiment, the first feed fraction and the second feed fraction may comprise the same feed ingredients.

In an embodiment relating to step (c), the water may be added in an amount of about 50 to 99 % by weight of the slurry.

In an embodiment step (e) may be carried out at a temperature of from about 60 degree Celsius to about 140 degree Celsius for a period of from about 0.1 seconds to 12 seconds. In an embodiment, step (h) may be carried out at a temperature of from about 60 degree Celsius to about 140 degree Celsius for a period of from about 0.1 seconds to 12 seconds.

Relating to step (i), the slurry of step (e) and the milled second feed fraction of step (f), (g) or (h) are mixed in a weight ratio of slurry to milled second feed fraction of about 10:90 to about 0.5:99.5.

In an embodiment relating to step (d), the one or more enzymes may be selected from xylanases, beta-glucanases, pectinases, cellulases, and hemicellulases.

In an embodiment relating to step (j), the feed pellet mixture of step (i) may be subjected to a temperature of about 60 to about 140 degrees Celsius for a period of time of about 1 to 12 seconds.

In an embodiment relating to step (k), the feed pellet mixture of step (i) or (j) may be subjected to a temperature of about 60 to about 140 degrees Celsius for a period of time of about 0.1 to 12 seconds.

In an embodiment, the milled first feed fraction of step (b) may have smaller particle size than the milled second feed fraction of step (f).

In an embodiment, the milled first feed fraction of step (b) may have a particle size ranging between about 0.05 mm and about 5 mm, preferably between about 2.0 mm and about 2.5 mm and the milled second feed fraction of step (f) may have a particle size ranging between about 0.5 and about 6 mm, preferably between about 3.0 mm and about 4.0 mm.

In an embodiment, the animal may be selected from ruminants, swine, and poultry.

In an embodiment, the animal may be a ruminant selected from bovine, ovine and caprine, preferably bovine.

## DETAILED DESCRIPTION OF THE INVENTION

### Definitions

In the present description and examples, a number of terms are used. In order to provide a clear and consistent understanding of the specification and claims, including the scope to be given to such terms, the following definitions are provided. Unless otherwise defined herein, all technical and scientific terms used have the meaning commonly understood by one of ordinary skill in the art to which this invention belongs. The disclosures of all publications, patent applications, patents and other references are incorporated herein in their entirety by reference.

For convenience in this application, the terms animal feed pellets and pelleting processes are used in their broadest sense to include all artificially agglomerated animal feeds produced from milled animal feed ingredients and the processes of making the same, regardless of the particular size, shape and physical form of the agglomerated animal feed product. Thus, animal feed pellets include agglomerated masses of animal feed ingredients produced in the form of cubes, cylinders, triangular forms and the like by forcing milled feed ingredients through die openings and cutting it into segments of convenient length for handling and feeding.

The term "good pellet quality" or "pellet meeting the industry standards of quality" is used herein in reference to the physical or structural characteristics of the pellets in relation to its hardness or durability.

The term "pellet hardness" as used herein refers to a measure that is used as an indication of the physical integrity of the pellet or to ensure the pellets are not too hard for the particular target animal. Therefore, the term "pellet having good hardness characteristics or having industrial standard of hardness" as used herein refers to pellets that have good physical integrity (e.g. will not easily break or form fines or crumbles during manufacturing, transport, storage, handling, etc.) and which are not too hard for the particular target animal. It is generally accepted that harder pellets or pellets having high hardness characteristics will also be more durable or have high durability characteristics as described above. Pellet hardness is typically measured on individual pellet and can be performed immediately after the pellets have left the cooler or at any other later time point. Pellet hardness can be measured using any conventional methods and apparatus in the art. Tablet hardness testing is a laboratory technique originally developed by the pharmaceutical industry to test the breaking point and structural integrity of a tablet under conditions of storage, transportation, and handling before usage. The breaking point of a tablet is based on its shape. Tablet hardness testing is similar to friability testing, but they are not the same thing. There are two main processes to test tablet hardness including 1) compression testing and 2) three-point bend testing. For compression testing, the analyst generally aligns the tablet in a repeatable way, and the tablet is squeezed by 2 jaws. The first machines continually applied force with a spring and screw thread until the tablet started to break. When the tablet fractured, the hardness is read with a sliding scale. Non-limiting examples of devices and methods for measuring pellet hardness include the Schleuninger tester (commercially available at http://www.pharmaceutical-technology.com/contractors/lab_equip/dr-schleuniger/ or http://www.pharmatron.com/products/hardness-testers/ or http://www.labx.com/product/schleuniger-hardness-tester), the Kahl Hardness Tester, the Acme Penetrometer, and others (Lowe et al (2005) Feed Tech. Vol. 9.2, pages 15-19). The units of measurement of tablet hardness mostly follows standards used in materials testing (International System of Units). A frequently used unit of measurement is the so-called "Kilopond" (abbreviated as "kp"). Kp is not to be confused with a pound. Kp is a unit of force also called a kilogram of force (abbreviated as Kgf) (kp is still used today in some applications, but not recognized by the SI system. 1 kilopond = 1 kgf). Other unit of measurements of tablet hardness include Kilogram (kg), Newton (N) (N is the SI unit of force; the standard for tablet hardness testing. 9.807 Newtons = 1 kilogram), Pound (lb) (lb is technically a unit of mass but can also be used for force and should be written as pound force (abbreviated as lbf). Lb is sometimes used for tablet strength testing in North America, but it is not an SI unit. 1 kilogram = 2.204 pounds), and Strong-Cobb (SC) (SC is an ad hoc unit of force which is a legacy of one of the first tablet hardness testing machines. 1 SC represents roughly 0.7 kilogram of force or about 7 newtons). The skilled person is well-acquainted with methods for determining hardness of feed pellets and knows the industry standards for hardness of feed pellets, depending on their content (type of nutrients, feed stuff, etc.), shape and size.

The term "pellet durability" as used herein refers to a measure that is used as an indication of the pellet attributes in terms of withstanding repeated handling as can occur during manufacturing, bagging, transportation, storage, and moving on feed lines without excessive breakage or generation of fine particles or crumbles. Therefore, the term "pellet having good or high durability characteristics or having industrial standard of durability" as used herein refers to pellets that can withstand repeated handling as can occur during manufacturing, bagging, transportation, storage, and moving on feed lines without excessive breakage or generation of fine particles or crumbles. Pellet durability can be measured using any conventional method and apparatus. A method for evaluating pellet durability was first developed in 1962 (Pfost et al. (1962), Chapter 4: A Standard Method of Measuring Pellet Quality. Proceedings of the 1962 Feed Production School sponsored by the Midwest Feed Manufacturers Association) and standardized in 1969 (Young et al., 1969; ASAE Standard S269.1). The standard was most recently revised in 2012, and the technique is defined by the American Society of Agricultural and Biological Engineers as ASAE Standard S269.5 (2012) (Stark and Fahrenholz (July 2015), K-State research and extension. Kansas State University Agricultural Experiment Station and Cooperative Extension Service; ASAE. 2012. Densified Products for Bulk Handling - Definitions and Method. ASAE Standard S269.5, pg. 91. American Society of Agricultural and Biological Engineers, St. Joseph, MI).

Typically, pellet durability is expressed as the pellet durability index (PDI) and is typically reported as a percentage (e.g. 95 percent PDI). Typically, the industry standards for durability or durability index of a feed pellet is between about 85 DPI and about 100 DPI. Pellet durability is typically measured by using a tumbling container device, in which the pellet sample to be tested is first sieved to remove fines, then tumbled in the tumbling container device for a defined period of time (typically for about 10 minutes at 50 rpm). The tumbled sample is then sieved to remove fines, and the amount of intact pellets is determined. The PDI can be calculated as following: [weight of intact pellet after tumbling / weight of intact pellet before tumbling] x 100. Non-limiting examples of devices that can be used to determine the pellet durability include the pfost tester, the Holmen pellet tester, the lignotester, etc. (Lowe et al (2005) Feed Tech. Vol. 9.2, pages 15-19). The skilled person is well-acquainted with methods and apparatuses for measuring pellet durability and knows the industry standards for durability of feed pellets, depending on their content (type of nutrients, feed stuff, etc.), shape and size.

The term "gelatinization of starch" as used herein refers to a process consisting of breaking down the intermolecular bonds of starch molecules in the presence of water and heat, allowing the hydrogen bonding sites (the hydroxyl hydrogen and oxygen) to engage more water. This irreversibly dissolves the starch granule in water. Water acts as a plasticizer. Typically, an amount of water of at least 60 weight % of the total composition (i.e. ingredients rich in starch such as grains, wheat, corn, etc.) is required to allow substantial or full gelatinization of starch (e.g. at least 50 weight %, 55 weight %, 60 weight %, 65 weight %, 70 weight %, 75 weight %, 80 weight %, 85 weight %, 90 weight %, 95 weight %, 96 weight %, 97 weight %, 98 weight %, 99 weight % or 100 weight % of the total amount of starch (e.g. wheat)) within said composition. Using less or reducing the amount of water below 60 weight % of the total composition (e.g. 5, 10, 15, 20, 25, 30, 35. 40, 45, 50, or 55 weight % of the total composition) will not yield appreciable amount of starch gelatinization, even under high temperatures (e.g. above 55 °C such as 100 degrees Celsius or more).

Typically, the gelatinization temperature of starch vary between 55 °C and 85 °C depending upon the source of the starch (e.g. grain type or plant type), its state (natural/unmodified or processed state) and the amount of water present, pH, types and concentration of salt, sugar, fat and protein in the recipe. As the gelatinized starch cools, it forms a gel that can serve as an adhesive or binder, causing particle binding. Therefore, it is understood that both the water content or moisture level of the composition (i.e. ingredients rich in starch such as grains) to be processed and the temperature will influence the degree or level of starch gelatinization in said composition. The degree of gelatinization or amount of gelatinized starch (weight %, e.g. at least 50 % weight %) in a composition (e.g. pellet composition or first feed fraction or second feed fraction as taught herein) can be determined by any suitable methods in the art. Non-limiting examples of methods include the enzymatic method, differential scanning calorimetry, and others. A preferred method is the enzymatic method (Shetty et al (1972) "Determining the degree of starch gelatinization", presented at the 57th annual meeting, contribution 822; Department of grain science and industry, Kansas agricultural Experiment Station, Kansas State University, Manhattan 66506; Chiang and Johnson (1977) Cereal Chem, Vol. 54(3), pages 429-435).

The term "conditioning" or "conditioning step" as used herein refers to a procedure conventionally used during the manufacture or production of animal feed pellets, where water, heat, steam, pressure and shear force are applied the mash mixture of feed ingredients. Typically conditioning, for instance via injection of steam, is applied for the purpose of reducing die wear and improving pellet quality in terms of durability or hardness characteristics. The conditioning conditions including amount of water, intensity of heat, steam, pressure and shear force as well as duration of treatment may vary depending on the type or content of the intended food pellets. The conditioning conditions may be relatively mild, e.g. temperatures ranging between 60 to 100 degrees Celsius (e.g. 60, 65, 70, 75, 80, 85, 90 or 95 degrees Celsius), pressure ranging between 1-5 MPa (e.g. 1, 2, 3, 4, or 5 MPa), and mild shear force generated by mixer device. Mild conditioning is typically applied to the mash mixture of feed ingredients, for period of time ranging between 1-10 minutes (e.g. 1, 2, 3, 4, 5, 6, 7, 8, 9 or 10 minutes), just prior pelleting to facilitate pellet formation. Typically, mild conditioning treatment does not significantly alter the integrity of the feed ingredients, e.g. does not substantially degrade proteins, does not substantially gelatinize starch, does not substantially destroy vitamins or beneficial enzymes, etc. In other words, "mild conditioning" employs conditioning conditions (e.g. temperature, pressure, shear force, water amount, duration of treatment) that are insufficient to completely gelatinize starch, degrade proteins, destroy vitamins and/or enzymes, etc.

Harsher condition conditions achieve the opposite. The term "harsh conditioning" or "conditioning at high temperature, pressure, and shear force conditions" refers to situations where high temperature (typically in the range of 110 - 160 degree Celsius, e.g., 110, 115, 120, 125, 130, 135, 140, 145, 150, 155 or 160 degree Celsius), pressure (typically in the range of about 25 to 40 MPa) and shear force conditions (e.g. extruder forces using screws) are applied to the mash or mixture of feed ingredients, for a short duration (typically 1-10 seconds, such as 1, 2, 3, 4, 5, 6, 7, 8, 9 or 10 seconds), to promote complete starch gelatinization as well as greater mixing and linkage of the ingredients. Animal feed pellet producers often implement harsher conditioning in the production to increase or improve hardness or durability characteristics of the pellets, particularly for pellets comprising ingredients rich in starch. Harsh condition conditions however is associated with negative effects, such as protein degradation, destruction of vitamins and essential enzymes, and overcooking of the feed ingredients, which overall decreases the nutritive value of the ingredients. The skilled person is well-acquainted with methods and apparatus to perform conditioning, and knows how to achieve mild or harsh conditioning as described above. Non-limiting examples of suitable conditioning apparatus or machinery include condition vessels, expander devices, BOA compacter, and the likes.

The term 'about', as used herein indicates a range of normal tolerance in the art, for example within 2 standard deviations of the mean. The term "about" can be understood as encompassing values that deviate at most 10%, 9%, 8%, 7%, 6%, 5%, 4%, 3%, 2%, 1%, 0.5%, 0.1%, 0.05%, or 0.01% of the indicated value.

The terms 'comprising' or 'to comprise' and their conjugations, as used herein, refer to a situation wherein said terms are used in their non-limiting sense to mean that items following the word are included, but items not specifically mentioned are not excluded. It also encompasses the more limiting verbs 'to consist essentially of' and 'to consist of'.

Reference to an element by the indefinite article 'a' or 'an' does not exclude the possibility that more than one of the elements is present, unless the context clearly requires that there be one and only one of the elements. The indefinite article 'a' or 'an' thus usually means 'at least one'.

The terms 'to increase', 'to decrease' or 'to improve', as taught herein, refer to the ability to significantly increase or significantly decrease or significantly improve an outcome such as durability or hardness characteristics of a pellet and/or nutritional value or content of a pellet. Generally, a parameter is increased or decreased or improved when it is at least 5%, such as 10%, 15%, 20%, 25%, 30%, 35%, 40%, 45%, 50% higher or lower or improved, respectively, than the corresponding value in a control pellet. In the context of the present invention, the control pellet may be a pellet produced by a process such as an extrusion process employing 'harsh' conditioning characterized by high temperature, pressure, and shear force conditions or may be produced by other traditional methods. Alternatively or additionally, the control pellet may be produced by the process as taught herein but where the gelatinized starch is replaced by an equivalent amount of molasses or other binders. When comparing whether or not durability or hardness characteristics of a pellet is increased or decreased or improved, the test pellet and the control pellet have preferably substantially (e.g. > 90%) the same ingredients (e.g. both pellets comprise 100% wheat). When comparing whether or not the nutritive value or content of a pellet is increased or decreased or improved, the test pellets and the control pellets are compared for the presence or absence of molasses or lignosulfonates or other disadvantageous additives or hardeners or binders and/or are compared in terms of percentage of natural ingredients and/or percentage of non-processed or non-cooked ingredients and/or in terms of percentage of gelatinized starch and/or percentage of vitamins and/or percentage of sodium or potassium or other minerals.

Pelleting process for making an animal feed pellet

The pelleting process of the invention allows for the production of animal feed pellets having higher nutritive value than conventional pellets without compromising (i.e. without decreasing) the hardness or durability characteristics of the pellets. The pelleting process of the invention is particularly suitable for the production of animal feed pellets comprising feed ingredients containing starch (e.g. grains).

It was surprisingly found that the traditional step of conditioning the mash mixture of feed ingredients using high temperature (e.g. 110-160 degrees Celsius or more), pressure and shear force conditions could be omitted while still maintaining the ability to produce pellets that meet or even exceed the industry standards for hardness or durability characteristics. Specifically, the present inventors found that a relatively small portion of the starting ingredients, which is rich in starch, could be used to produce gelatinized starch upon heat treatment in a separate step of the manufacturing process. It was found that the gelatinized starch could be added to the core of the feed ingredients (e.g. mash mixture of feed ingredients) at a later time point during the manufacturing process (e.g. just before pelleting) to effectively replace the traditional conditioning step that is carried out at high temperatures. That is because the separately added gelatinized starch, derived from a small portion of the start ingredients, was surprisingly found to be sufficient to tightly bind the feed ingredients of the mash mixture upon drying without having to apply high heat or steam treatment and/or without having to add binders like molasses, as customary done in the field. It was also found that the amount of water in the feed ingredients or to be added to the feed ingredients could be kept to a minimal levels, for instance less than 20 weight % of the total feed ingredients to be pelleted. This not only prevents any substantial starch gelatinization to occur or take place within the feed ingredient composition to be pelleted but also reduces or eliminates the need to add materials to the feed mix to improve pellet binding properties. The process taught herein may also allow for the production of animal feed pellets which have a relatively low gelatinized starch content compared to feed pellets obtained by traditional processes (e.g., processes using binding agents such as molasses).

This represents a main departure from the prevailing school of thoughts in the field, where it is believed that conditioning of the mash mixture of feed ingredients using high temperature (e.g. 110-160 degrees Celsius or more), pressure and shear force conditions and/or use of binding agents (e.g. molasses) is required or essential to obtain pellets having hardness and durability characteristics meeting the industry standards. Particularly, this holds true for feed pellet compositions comprising starch or high level of starch.

In the light of the above, it is therefore surprising and unexpected that removing the step of conditioning the whole mash mixture of feed ingredients using high temperature, pressure and shear force conditions would yield animal feed pellets having surprisingly good quality, i.e. pellets with increased pellet durability, compared to pellets obtained from traditional processes (e.g. process using harsh conditioning and/or binding agent such as molasses).

The pelleting process of the invention produces animal feed pellets having several advantages compared to traditional pellets, including:

1. The nutritive value of the starting ingredients can be preserved i.e. no or less denaturation of proteins, substantially less or no gelatinization of starch, no or less destruction of vitamins, no or less adverse reaction or by-products (e.g. Maillard by-products). This means that no or less supplement(s) or ingredient(s) need to be added to the formulation to either to compensate for loss in nutritive properties engendered by traditional harsh extruding treatment or to increase or improve hardness or durability characteristics of the pellets. Further, since the gelatinized starch is derived from the starting ingredients, its incorporation into the mash of feed ingredients further contributes to increase the nutritional value of the pellets.

2. The pelleting process of the invention allows for the preparation of animal feed pellets having higher nutritive value, e.g. less sugar and/or less potassium, than conventional pellets without compromising or decreasing the hardness or durability characteristics of the pellets. In fact, as shown in the experimental section, the pellets produced by the process of the invention even exceed the industry standards of pellet quality, i.e. higher durability compared to pellets produced by conventional processes (e.g. using binding agents such as molasses).

3. The pelleting process of the invention is simpler and more economical from an industrial stand point because there is no or less need for additives (e.g. binders, hardeners, compensatory nutritional ingredients, etc.) and because the present process reduces or substantially eliminates the need for complex regimens of temperature, pressure and/or shear force conditions. The process of the invention also allows more raw material flexibility.

4. The pelleting process of the invention provides customers with products having different properties and quality standards, which were not available before. Specifically, the process of the invention answers the demand for products which are as natural (e.g. organic, less processing) as possible, without or with less additives or supplements and which are not over processed or cooked but yet can be in a pelleted form meeting the industry standards for the target animal.

The present invention relates to a pelleting process for making an animal feed pellet, said process comprising the steps of:

a) providing a first feed fraction and a second feed fraction;
b) milling the first feed fraction;
c) adding water to the milled first feed fraction of step (b) to obtain a slurry;
d) optionally, adding one or more enzymes to the slurry of step (c) to at least partially degrade or hydrolyse non-starch polysaccharides contained in said milled first feed fraction;
e) heating the slurry of step (c) or (d) under conditions sufficient to allow the starch to substantially gelatinize or fully gelatinize;
f) milling the second feed fraction;
g) optionally, adding one or more aqueous liquids and/or applying steam to the milled second feed fraction of step (f) to obtain a feed mash;
h) optionally, heating the fraction of step (f) or the mash of step (g) under conditions insufficient to gelatinize starch or denature proteins comprised in the fraction or mash;
i) mixing the slurry of step (e) with the fraction or mash of step (f), (g) or (h) to obtain a feed pellet mixture;
j) optionally, heating the feed pellet mixture of step (i) under conditions insufficient to gelatinize starch or denature proteins comprised in the mixture; and
k) subjecting the feed pellet mixture of step (i) or (j) to a pelleting device to form an animal feed pellet, wherein optionally the feed pellet mixture of step (i) or (j) is heated under conditions insufficient to gelatinize starch or denature proteins comprised in the feed pellet mixture in the pelleting device;
l) optionally, cooling the feed pellet of step (k);
m) optionally, drying the feed pellet of step (k) and/or (l);

wherein at least steps (c) to (e) are carried out independently of steps (g) to (h), and which is as set out in claim 1.

In step (a), the term "first feed fraction" as used herein refers to a fraction comprising one or more starch containing sources such as one or more feed ingredients suitable for animal consumption that contain starch, preferably one or more feed ingredients that are rich in starch. Non-limiting examples of feed ingredients containing starch or rich in starch includes grains or derivative thereof (e.g. meal, flour, whole grain or part of a grain, or modified grain, root, tubers such as potato, yam, sweet potato, cassava and derivatives thereof, such as tapioca, and others, preferably tapioca etc.). The term "grains" as used herein refers to small, hard, dry seeds, with or without attached hulls or fruit layers, harvested for human or animal consumption. Agronomists also call the plants producing such seeds "grain crops". The two main types of commercial grain crops are cereals and legumes. Non-limiting examples of grain cereals include wheat, millet, maize (corn), sorghum, barley, rye, rice, oats, spelt, triticale, buckwheat, amaranth, buckwheat, chia, quinoa, and others. Non-limiting examples of grains legumes include common beans, chickpeas, common peas (garden peas), fava beans, lentils, lima beans, peanuts, soybeans, and others. Other non-limiting examples of grains or seeds include rapeseed, sunflower seeds, safflower seeds, sunflower seeds, flax seeds, hemp seeds, poppy seeds, and others.
In an embodiment, the grain may be selected from wheat, oat, rice, rye, barley, millet, quinoa, sorghum, beans, buckwheat, amaranth, soybeans, lentils, and others, preferably wheat.

In an embodiment, the starch-containing sources of the first feed fraction may be selected from wheat, corn, milo, rice, barley, soya, rye, spelt, oats, sorghum, potato, tapioca, tuber, legumes, cotton seed meal, flax seed meal, and others, and any mixtures thereof.

In a preferred embodiment, the first feed fraction is wheat or wheat flour, preferably grinded or broken wheat or wheat flour.

In an embodiment, the first feed fraction may comprise between about 10 weight % to about 100 weight % of starch, preferably at least 10%, 20%, 30%, 40%, 45%, 50%, 55%, 60%, 65%, 70%, 75%. 80%, 85%, 90%, 95%, 96%, 97%, 98%, 99% or more weight % of starch, preferably at least 40% weight % of starch. It is understood that the wt.% of starch contained in the first feed fraction will largely depend on the feed ingredient selected. For instance, oats contain about 40 wt.% of starch while barley and wheat contain about 50 wt.% and about 55 wt.% of starch, respectively.

In step (a), the term "second feed fraction" as used herein refers to the raw ingredients making up the animal feed pellet composition or formulation. The "second feed fraction" may comprise one or more feed ingredients from an animal source or a plant source that is suitable for feeding an animal. Depending on the animal for which the animal feed pellet is indented, the type of ingredients for the second feed fraction will vary. The skilled person knows how to select ingredients suitable for the second feed fraction in function of the animal category (e.g. ruminants (e.g. cows, beef), monogastric animals (pigs), poultry (e.g. broiler chicken), etc.) or species or developmental stage of an animal within a given category or species. For instance, for ruminants (e.g. cow, beef, etc.) non-limiting examples of suitable feed ingredients for the second feed fraction may include barley, wheat, corn, rapeseed meal, soybean meal, soya hulls, sunflower meal, sugar beet pulp, and others. For poultry (e.g. broiler chicken), non-limiting examples of suitable feed ingredients for the second feed fraction may include barley, wheat, wheat flour corn, corn germ, rapeseed meal, soybean meal, egg powder, sunflower meal, wheat middlings, oat middlings and others. For swine (e.g. pigs), non-limiting examples of suitable feed ingredients for the second feed fraction may include barley, oats, wheat, corn, breadcrumbs, lineseed, rapeseed meal, soybean meal, wheat middlings, wheat gluten, oak flakes, and others.

In an embodiment relating to the second feed fraction, the one or more feed ingredients from the plant source may be selected from wheat, corn, milo, rice, beets, barley, soya, rye, spelt, oats, sorghum, legumes, cotton seed meal, flax seed meal and mixtures thereof.

In an embodiment relating to the second feed fraction, the one or more feed ingredients from the animal source is selected from meat, meat meal, bone meal, fish meal, insects, insect meal, and any mixtures thereof.

In a preferred embodiment relating to the second feed fraction, the one or more feed ingredients is from a plant source, preferably grains as taught herein, e.g. wheat, oat, rice, rye, barley, millet, quinoa, sorghum, beans, buckwheat, amaranth, soybeans, lentils, triticale, and others. It may be advantageous to select a grain, particularly a grain comprising starch or a grain that is rich in starch, as one or the main starting ingredients for the production of animal feed pellets because grains in general have high nutritive value for animals.

Other non-limiting examples of ingredients suitable for the second feed fraction include alfalfa, beet and its derived products, various industrial by-products (e.g. brewer's grain, brewer's yeast, pulp, casein, molasses etc.), seed oil, potato, tuber, tapioca, fruit, algae, yeast, roughage, plant fibres, and others and any mixture thereof.

In an embodiment, the second feed ingredients fraction may comprise between about 0 weight % to about 100 weight % of starch, preferably at least about 5%, 10%, 20%, 30%, 40%, 45%, 50%, 55%, 60%, 65%, 70%, 75%. 80%, 85%, 90%, 95%, 96%, 97%, 98%, 99% or more weight % of starch.

In an embodiment, the second feed fraction may be a mixture of different ingredients as taught herein, in any desired ratio, for instance a mixture of wheat and corn in a weight % ratio of about 50:50.

In an embodiment, the second feed fraction may consist of a single type of ingredient, for instance about 100% wheat or about 100% corn, or about 100% barley or about 100% rye or about 100% triticale, etc.

In an embodiment, the first feed fraction and the second feed fraction comprise the same feed ingredients, for instance wheat. It is also understood that the first feed fraction may be a part or a proportion of the second feed fraction. For instance if the second feed fraction consists of 100 g of a mixture of wheat and corn, the first feed fraction may be a proportion of this mixture, e.g. 30 g.

In an embodiment, the first feed fraction and the second feed fraction comprise different feed ingredients, e.g. the first feed fraction may comprise wheat and the second feed fraction may comprise a mixture of corn, milo, rice and barley.

In step (b), the first feed fraction may be milled or ground or comminuted or reduced to powder using standard techniques. In an embodiment, the first feed fraction be milled or ground to obtain particles having a size of at least about 0.05 mm to about 5 mm, e.g. about 0.1 mm to about 4.5 mm, about 0.5 mm to about 4.0 mm, about 1.0 mm to about 3.5 mm, about 1.5 mm to about 3.0 mm or about 2.0 mm to about 2.5 mm. In a preferred embodiment, the first feed fraction may be milled or ground to obtain particles having a size of at least about 2.0 mm to about 2.5 mm. It is understood that depending on the target animal, the first feed ingredient fraction may be milled or ground to obtain particles having a size suitable for said target animal. The skilled person knows how to select milling or grinding or comminuting parameters to obtain the desired results per target animal. The first feed fraction may be milled using any suitable apparatus (e.g. a hammer mill). Alternatively, the first feed fraction may already be provided in a milled or grounded or comminuted form in compliance with the requirements above, so that step (c) can be omitted in such situation.

In step (c), the milled or ground or comminuted first feed fraction is mixed with a sufficient amount of water to obtain a slurry, i.e. until it reaches the consistence of a thick fluid akin mud or cement. The skilled person is well-acquainted with the term "slurry" and can even determine it visually. Depending on the type of ingredients constituting the first feed fraction, the skilled person knows how much water should be added to the milled or ground or comminuted first feed fraction so as to obtain a slurry. Preferably, the slurry has a dextrose equivalent value of at most 25, 20, 15, 10, 9, 8, 7, 6, 5, 4, 3, 2, 1, or 0.5 %. Dextrose equivalent (DE) is a measure of the amount of reducing sugars present, expressed as a percentage on a dry basis relative to dextrose. The dextrose equivalent gives an indication of the average degree of degradation. For example, DE can be measured by a titration method, e.g. according to Lane and Eynon or Luff-Schoorl and/or as described in Carbohydrate biotechnology protocols (Christopher Bucke, 1999), particularly chapter 10 - section 3.2 thereof.

In an embodiment, the amount of water or moisture level may be between about 50 to about 99 weight % of the slurry, preferably between about 55 to about 95 weight % of the slurry, preferably between about 60 to about 90 weight % of the slurry, preferably between about 65 to about 85 weight % of the slurry, preferably between about 70 to about 80 weight % of the slurry. The slurry preferably comprises at least 0.2, 0.3, 0.5, 0.5, 0.6, 0.75, 0.8, 0.9, 1, 1.25, 1.5, 2, 3 wt.% (pre)gelatinized starch (preferably in liquid form), and/or at most 30, 20, 10, 5, 3, 2 wt.%.

In step (d), although not essential, enzymes capable of degrading non-starch polysaccharide may be added. Such enzymes are referred to as "non-starch polysaccharide hydrolysing enzyme (s)" (abbreviated NSP-E). Any suitable NSP-E enzymes may be used in the processes as taught herein. The amount of enzyme needed will depend the type of ingredients making up the first feed fraction as well as the size or weight of the first feed fraction. The skilled person is well acquainted with NSP-E and is able to select a suitable NSP-E enzyme as well as to determine the appropriate dosage. Non-limiting examples include xylanases, beta-glucanases, pectinases, cellulases, hemicellulases, such as arabinase, xylase, mannase, arabinoxylanases, xylosidase, galactomannase, pectinase, (1,3- or I,4-)-β-glucanase and (endo)-xylanase, and mixture thereof. NSP-E are commercially available.

In certain embodiments relating to step (d), it may be advantageous to add one or more NSP-E enzymes, particularly in cases where the first feed fraction comprises ingredients containing non-starch polysaccharides (e.g. cereals, soybean meal etc.). The addition of NSP-E enzymes helps in obtaining a slurry having the right consistency at a desired high weight percentage (e.g. not too pasty or wall-sticking) so as not to clog or obstruct the machinery or equipment used during the manufacturing operation (e.g. pump, mixer, etc). Alternatively, NSP-E enzymes may be omitted if the starch-containing ingredients fraction does not comprise or comprise low amounts of ingredients containing non-starch polysaccharides (e.g. cereals, soybean meal, etc.), for instance in the case where the first feed fraction is wheat flour.

In an embodiment, the NSP-E enzymes may be selected from xylanases, beta-glucanases, pectinases, cellulases, hemicellulases.

In step (e) the slurry may be heated to a temperature ranging from about 60 degree Celsius to about 140 degree Celsius and/or for a period of from about 0.1 seconds to 12 seconds, preferably at a temperature ranging from about 70 degree Celsius to about 135 degree Celsius and/or for a period of from about 0.2 seconds to 10 seconds, preferably at a temperature ranging from about 80 degree Celsius to about 130 degree Celsius and/or for a period of from about 0.5 seconds to 8 seconds, preferably at a temperature ranging from about 90 degree Celsius to about 125 degree Celsius and/or for a period of from about 0.7 seconds to 6 seconds, preferably to a temperature of at least 80, 90, 95, 100, 105, 110 degrees or ranging from about 100 degree Celsius to about 120 degree Celsius and/or for a period of from about 1.0 seconds to 2 seconds.

In an embodiment relating to step (e), the slurry may be heated at an intensity (e.g. about 60 degree Celsius to about 140 degree Celsius such as about between 120 - 125 degree Celsius) and for a duration of time (e.g. about 0.1 seconds to 12 seconds such as about 10 - 12 seconds) sufficient to substantially or fully gelatinize the starch comprised in the first feed fraction, e.g. at least 50 weight %, preferably 55 weight %, preferably 60 weight %, preferably 65 weight %, preferably 70 weight %, preferably 75 weight %, preferably 80 weight %, preferably 85 weight %, preferably 90 weight %, preferably 95 weight %, preferably 96 weight %, preferably 97 weight %, preferably 98 weight %, preferably 99 weight %, preferably 100 weight % of the total amount of starch comprised in the first feed fraction.

The skilled person is well acquainted with methods (including temperature parameters, duration (time), water content, etc.) suitable for gelatinizing starch to a desired degree (e.g. at least 50 weight %, 55 weight %, 60 weight %, 65 weight %, 70 weight %, 75 weight %, 80 weight %, 85 weight %, 90 weight %, 95 weight %, 96 weight %, 97 weight %, 98 weight %, 99 weight % or 100 weight % of the total amount of starch to be gelatinized). The skilled person is also familiar with methods for determining the degree of gelatinization of a given composition, for instance using the methods described in Shetty et al (1972) "Determining the degree of starch gelatinization", presented at the 57th annual meeting, contribution 822; Department of grain science and industry, Kansas agricultural Experiment Station, Kansas State University, Manhattan 66506 or in Chiang and Johnson (1977) Cereal Chem., Vol. 54(3), pages 429-435.

In an embodiment relating to step (e), the slurry may be heated by applying steam or hot air to the slurry, said steam or hot air having a temperature ranging as taught herein. The steam or hot air may be applied for a duration of time as taught herein. The skilled person is well-acquainted with methods and devices suitable to apply steam or hot air to the first feed fraction so as to obtain a slurry. A non-limiting example of a suitable devices for applying hot air or steam is a jet cooker (commercially available from Henan Food systems b.v., Sappemeer, The Netherlands). Other non-limiting examples of devices for applying steam include an heat exchanger, a stirred autoclave or heated vessel, microwave.

In step (f), the second feed fraction may be milled or ground or comminuted or reduced to powder using suitable techniques and apparatuses available in the field. In an embodiment, the second feed ingredient fraction may be milled or ground to obtain particles having a size of at least about 0.5 mm to about 6 mm, e.g. about 1.0 mm to about 5.5 mm, about 1.5 mm to about 5.0 mm, about 2.0 mm to about 4.5 mm, about 2.5 mm to about 4 mm. In a preferred embodiment, the second feed ingredients fraction may be milled or ground to obtain particles having a size of at least about 3 mm to about 4 mm. It is understood that depending on the target animal, the second feed ingredient fraction may be milled or ground to obtain particles having a size suitable for said target animal. The skilled person knows how to select milling or grinding or comminuting parameters to obtain the desired results per target animal. The second feed fraction may be milled using any suitable apparatus (e.g. a hammer mill).

In a preferred embodiment, the milled first feed fraction has smaller particle size than the milled second feed fraction of step, for instance first feed fraction may have a particle size of about 2 mm to about 2.5 mm and the second feed fraction may have a particle size of about 3 mm to about 4 mm.

In step (g), although not essential, the milled or ground or comminuted second feed fraction may be mixed with a liquid (e.g. water, oils, or other water-based liquids such as molasses, vinasses, protomylasses, liquid whey) or subjected to steam so as to ease or help mixing the second feed fraction to form a feed mash, and to ease the pelleting process later on. Depending on the type of ingredients constituting the second feed fraction, the skilled person knows how much water should be added to the milled or ground or comminuted second feed fraction so as to achieve the purpose above (feed mash). In an embodiment, the amount of aqueous liquid (e.g. water) or moisture level may be between about 5 to about 50 weight % of the mixture, preferably between about 10 to about 45 weight % of the mixture, preferably between about 15 to about 40 weight % of the mixture, preferably between about 17 to about 35 weight % of the mixture, preferably between about 18 to about 30 weight % of the mixture, preferably between about 16 to about 25 weight %, preferably between about 14 to about 20 weight %, preferably between about 12 to about 15 weight % of the mixture. In a preferred embodiment, the amount of water or moisture level of the second feed fraction is no more than 12 weight % of the mixture. Is understood that when the amount of water or moisture level is low, i.e. no more than 10 weight % of the mixture, no appreciable amount of starch gelatinization of starch can take place (e.g. < 50 weight %, 45 weight %, 40 weight %, 35 weight %, 30 weight %, 25 weight %, 20 weight %, 15 weight %, 10 weight %, 5 weight %, 4 weight %, 3 weight %, 2 weight %, 1 weight % or 0 weight % of the total amount of starch in the second feed fraction), even at temperature above 60 degrees Celsius, since water is a limiting factor in the starch gelatinization process, as taught above.

In step (h), although not essential, the second feed fraction or feed mash may be heated to or subjected to steam at a temperature ranging from about 60 degree Celsius to about 140 degree Celsius and/or for a period of from about 0.1 seconds to 12 seconds, preferably at a temperature ranging from about 65 degree Celsius to about 135 degree Celsius and/or for a period of from about 0.2 seconds to 10 seconds, preferably at a temperature ranging from about 70 degree Celsius to about 130 degree Celsius and/or for a period of from about 0.5 seconds to 8 seconds, preferably at a temperature ranging from about 75 degree Celsius to about 125 degree Celsius and/or for a period of from about 0.7 seconds to 6 seconds, preferably at a temperature ranging from about 80 degree Celsius to about 120 degree Celsius and/or for a period of from about 1.0 seconds to 4 seconds, preferably at a temperature of at least 80, 85, 90, 95, 100, 105, 110 degrees Celsius or ranging from about 85 degree Celsius to about 115, degree Celsius and/or for a period of from about 1.5 seconds to 3 seconds, preferably at a temperature ranging from about 90 degree Celsius to about 100, degree Celsius and/or for a period of from about 1.7 seconds to 2 seconds. As explained above, such heat treatment regimens or conditions are insufficient to gelatinize, such as substantially or fully gelatinize, the starch comprised in the second feed fraction or feed mash (e.g. < 50 weight %, 45 weight %, 40 weight %, 35 weight %, 30 weight %, 25 weight %, 20 weight %, 15 weight %, 10 weight %, 5 weight %, 4 weight %, 3 weight %, 2 weight %, 1 weight % or 0 weight % of the total amount of starch in the second feed fraction) because the water or moisture level present in said second feed fraction or feed mash is too low or insufficient allow starch gelatinization.

In step (i) the slurry and the milled second feed fraction or feed mash are mixed in a weight ratio of slurry to milled second feed fraction of about 10:90 to about 0.5:99.5. In step (i), the slurry is mixed with the second feed fraction or feed mash in a manner so as to form an homogeneous feed pellet mixture suitable for pelleting. The mixing of the ingredients can be performed using any suitable standard means for mixing feed ingredients.

The present inventors surprisingly found that a relatively small proportion of the slurry (gelatinized starch), e.g. about between 1 wt.% to about 6 wt.%, e.g. 1 wt.%, 2 wt.%, 3 wt.%, 4 wt.%, 5 wt.%, or 6 wt.% of slurry, was sufficient to bind and link the feed ingredient of the second feed fraction or feed mash so as to obtain good pellet quality (high durability and hardness qualities) following pelleting, that meets industry standards. This was surprisingly achieved without having to use harsh conditioning procedures (high temperature and steam/moisture levels) or binding agents such as molasses, which are usually used in the industry to obtain animal feed pellets having the industry standards of hardness and durability.

In step (j), although not essential, the feed pellet mixture may be may be heated to or subjected to steam at a temperature ranging from about 60 degree Celsius to about 140 degree Celsius and/or for a period of from about 0.1 seconds to 12 seconds, preferably at a temperature ranging from about 65 degree Celsius to about 135 degree Celsius and/or for a period of from about 0.2 seconds to 10 seconds, preferably at a temperature ranging from about 70 degree Celsius to about 130 degree Celsius and/or for a period of from about 0.5 seconds to 8 seconds, preferably at a temperature ranging from about 75 degree Celsius to about 125 degree Celsius and/or for a period of from about 0.7 seconds to 6 seconds, preferably at a temperature ranging from about 80 degree Celsius to about 120 degree Celsius and/or for a period of from about 1.0 seconds to 4 seconds, preferably at a temperature ranging from about 85 degree Celsius to about 115, degree Celsius and/or for a period of from about 1.5 seconds to 3 seconds, preferably at a temperature of at least 80, 85, 90, 95, 100, 105, 110 degrees Celsius or ranging from about 90 degree Celsius to about 100, degree Celsius and/or for a period of from about 1.7 seconds to 2 seconds. As explained above, such heat treatment regimens or conditions are insufficient to gelatinize, such as substantially or fully gelatinize, the starch comprised in the second feed fraction or feed mash (e.g. < 50 weight %, 45 weight %, 40 weight %, 35 weight %, 30 weight %, 25 weight %, 20 weight %, 15 weight %, 10 weight %, 5 weight %, 4 weight %, 3 weight %, 2 weight %, 1 weight % or 0 weight % of the total amount of starch in the second feed fraction) because the water or moisture level present in said second feed fraction or feed mash is too low or insufficient allow starch gelatinization. The present inventors have found that it may be advantageous in certain embodiment to subject the feed pellet mixture to heat or steam treatment as taught above so as to speed up or help the drying of the feed pellet, after pelleting. It may also be advantageous to ease or help the pelleting process per se, e.g. by making the feed pellet mixture more malleable or amenable to pelleting (cause less stress or friction in the pelleting device).

In step (k), the feed pellet mixture is subjected to a pelleting device suitable to form pellet of the desired size, length and shape. Non-limiting examples of suitable pelleting device manufactures include CPM, Kahl, van Aarsen. Although not essential, the feed pellet mixture may be subjected to the same heat or stream treatment as taught above (for step (h) or (j)) within the pelleting device. The skilled person understands that depending on the feed pellet composition and depending on the animal for which the feed pellet is indented, pellets of varying size, shape and/or length are desired. The skilled person knows how to select a suitable pelleting device to obtain the desired animal feed pellet characteristics.

In step (l), although not essential, the feed pellets may be (actively) cooled, using any suitable standard cooling devices or may be cooled by letting the feed pellet cool down under ambient room temperature. Any suitable cooling device may be used. Non-limiting examples of suitable cooling devices include belt coolers, counter flow coolers.

In step (m), although not essential, the feed pellets may be (actively) dried using any using any suitable standard drying devices or may be dried by letting the feed pellet dry under ambient room temperature. Any suitable drying device may be used. Non-limiting examples of suitable drying devices include counter flow dryers, drum dryer.

In an embodiment, the animal for which the animal feed pellets as taught herein are intended may be any animal, male or female, at any developmental stage (e.g. new born, juvenile, adult, elderly). Non-limiting examples of animals include livestock or cattle animals such as cows, bulls, horses, sheeps, goats, swines, layers, broilers, turkeys, rabbits etc, domestic animals such as cats, dogs, horses, rats, mice, rabbits, etc.

In an embodiment, the animal is not an aquatic animal such as fish, shrimps, lobsters, etc.

In a preferred embodiment, the animal is a livestock or a cattle animal selected from cows, beef, bulls, oxen, calves, sheep, goats, horses, swine, poultry, etc.

In an embodiment, the animal may be selected from ruminants, swine, and poultry.

In an embodiment, the ruminant may be selected from bovine, ovine and caprine, preferably bovine, e.g. non-limiting examples include dairy cattle (e.g. lactating cow), beef cattle (e.g. beef, bulls), sheep, goats, buffalo, moose, elks, bison, giraffes, yak, deer, antelopes, and the like.

In the method as taught herein, at least steps (c) to (e) are carried out independently of steps (g) to (h), preferably steps (a) to (e) are carried out independently of steps (f) to (h).

This represents a unique feature, which is not carried out in traditional pelleting or extrusion processes or methods.

In an embodiment, steps (c) to (e) may be performed simultaneously with steps (g) to (h) or almost at the same time as steps (g) to (h), preferably steps (a) to (e) may be performed simultaneously with steps (f) to (h) or almost at the same time as steps (f) to (h)

In an embodiment, steps (c) to (e) may be performed shortly before or shortly after performing steps (g) to (h), preferably steps (a) to (e) may be performed shortly before or shortly after performing steps (f) to (h).

It is understood that steps (c) to (e) and steps (g) to (h), preferably steps (a) to (e) and steps (f) to (h) may be carried out as taught above within the same industrial process, e.g. within the same production lines using suitable equipment as taught herein.

Overall, the process of the invention is particularly well-suited to handle animal feed pellet composition comprising starch (e.g. grains rich in starch). Further, the process of the invention allows for the production of animal feed pellets having a higher nutritive value or content (e.g. less sugars and/or less potassium) than customary obtained by traditional processes without compromising the industrial standard of quality for hardness or durability.

## EXAMPLES

### Comparative example 1: production of animal feed pellets

### Aim

The aim of this experiment was to compare the durability characteristics of animal feed pellets produced by the pelleting process of the invention (relying on the use of a slurry of gelatinized starch) and animal feed pellets produced according to a traditional process (relying on the use of a binding agent (molasses)).

### Experimental procedure

**Test group (using a slurry of gelatinized starch):** The test group consists of animal feed pellets produced by the pelleting process as taught herein. The first feed fraction consisted of wheat and the second feed fraction consisted of a mixture of corn, sodium chloride, magnesium chloride, premix, and soy oil. Specifically, the animal feed pellets were prepared as follows:

- An amount of 50 kg of wheat (as first feed fraction) and an amount of 5000 Kg of mixture consisting of corn, sodium chloride, magnesium chloride, premix, and soy oil (as second feed fraction) were provided.
- The wheat was milled to obtain particles having a size of about 2.25 mm.
- The milled wheat was placed in a slurry tank comprising a mixing paddle. An amount of 100 litres of water was added to the slurry tank. The milled wheat was then added to the slurry tank and mixed with the water with the mixing paddle to obtain a slurry.
- In a subsequent step, the slurry was placed into a jet cooker. The slurry was heated at a temperature of 123 degrees Celsius for a period of 10 seconds, under steam pressure of 4 Kpa, until the slurry was gelatinized.
- The second feed fraction consisting of a mixture of corn, sodium chloride, magnesium chloride, premix, and soy oil, was milled to obtain particles having a size of 4 mm.
- The slurry of gelatinized starch (first feed fraction) was mixed with the milled second feed fraction to obtain an animal feed pellet mixture. The ratio wt.% of slurry (first feed fraction) to milled second feed fraction was 3:97.
- The animal feed pellet mixture was subjected to a pelleting device to form animal feed pellets at a temperature of 50.8 degrees Celsius for a period of 10 seconds. The animal feed pellets produced had a cylindrical shape, with a length of 4 mm and a diameter of 2 mm.
- The animal feed pellets were cooled at room temperature.
- The animal feed pellets produced by the method above are suitable for ruminants, e.g. cow, beef etc.

**Control group (using a binding agent (molasses)):** The control group consists of animal feed pellets produced by the traditional process, where steps relating to the preparation of a slurry of gelatinized starch and provision of a first feed (e.g. wheat) fraction were omitted. A binding agent consisting of molasses was used instead of the slurry of gelatinized starch. The second feed fraction consisted of a mixture consisting of corn, sodium chloride, magnesium chloride, premix, and soy oil. Specifically, the animal feed pellets were prepared as follows:

- An amount of 5000 Kg of a mixture consisting of corn, sodium chloride, magnesium chloride, premix, and soy oil (as second feed fraction) was provided.
- This second feed fraction was milled to obtain particles having a size of 4 mm.
- Molasses was added to the milled second feed fraction in a wt.% ratio of molasses to second feed fraction of 2:98 so as to obtain an animal feed pellet mixture. The animal feed pellet mixture was then heated at a temperature of 123 degrees Celsius for a period of 10 seconds, under steam pressure of 4 Kpa.
- The animal feed pellet mixture was subjected to a pelleting device to form animal feed pellets at a temperature of 50.8 degrees Celsius for a period of 10 seconds. The animal feed pellets produced had a cylindrical shape, with a length of 4 mm and a diameter of 2 mm.
- The animal feed pellets were cooled at room temperature.
- The animal feed pellets produced by the method above are suitable for ruminants, e.g. cow, beef etc.

**Assessment of animal feed pellet durability**

The durability of the animal feed pellets (both test group and control group) obtained by the methods described above was subsequently assessed using a Q-post tester apparatus. Briefly, the test was carried out as follows:

- The animal feed pellets obtained by the methods described above (both test group and control group) were sieved to remove fines and/or dust.
- An amount of 500 grams of sieved pellets were introduced in the tumbling container of the Q-post tester apparatus. The animal feed pellets were tumbled in the Q-post tester apparatus for a period of 10 minutes at 50 rpm.
- At the term of the tumbling phase, the animal feed pellets and dust were transferred to a collecting container.
- The animal feed pellets were sieved to removed fine and/or dust, after which the amount (weight) of intact pellets was determined.
- The pellet durability (% PDI) was calculated as following:

[weight of intact pellets after tumbling / weight of intact pellets before tumbling] x 100.

**Results**

The results show that the animal feed pellets obtained from the method according to the invention (i.e. test group relying on the use of a slurry of gelatinized starch) had a durability of 86.6 % PDI compared to animal feed pellets obtained by a traditional process (i.e. control group relying on the use of a binding agent (molasses)), which had a durability of 83.4 % PDI. The results show that the animal feed pellets obtained by the process of the invention (i.e. test group using a slurry of gelatinized starch) not only had durability properties that meet industry standards but also had durability properties that surpassed the durability properties of the animal feed pellets obtained by the traditional process (i.e. control group using binding agent (molasses)).

Further, the animal feed pellets produced by the method of the invention (i.e. test group using a slurry of gelatinized starch) had superior nutritive value (e.g. devoid of molasses and comprising less sugar and potassium) compared to the animal feed pellets obtained by a traditional process (control group using binding agent (molasses)).

**Comparative example 2**

In this example, 4 different compositions of animal feed pellets were prepared according to the present disclosure wherein the slurry as obtained in step c) either was based on

1) standard recipe with mollases/ vinasse; or
2) recipe with 1,5% liquid gelatinized starch instead of mollasses/vinasses.

Table 1 - Results on durability

| Recipe | Animal feed pellets as prepared with the slurry according to 1) | Animal feed pellets prepared with the slurry according to 2) |
|--------|------------------------------------------------------------------|--------------------------------------------------------------|
| code A | 96,8 | 97,4 |
| code B | 96,7 | 96,8 |
| code C | 96,8 | 97,0 |
| code D | 97,4 | 97,6 |

Table 2 - Results on hardness

| Recipe | Animal feed pellets as prepared with the slurry according to 1) | Animal feed pellets prepared with the slurry according to 2) |
|--------|------------------------------------------------------------------|--------------------------------------------------------------|
| code A | 11,6 | 11,5 |
| code B | 7,9 | 6,4 |

(continued)

| Recipe | Animal feed pellets as prepared with the slurry according to 1) | Animal feed pellets prepared with the slurry according to 2) |
|---|---|---|
| code C | 14,8 | 11,2 |
| code D | 10,7 | 9,8 |

As can be seen, durability was increased while at the same time hardness was advantageously decreased (improves edibility) when using the slurry according to 2)

As a further improvement, it was found that a gelatinization period of at most 5 minutes in step e) further prevents loss in nutritional value and undesired Maillard reactions.

## Table 3 – Details of recipes A, B, C, and D

| Code | A standard with molasses/vinasse | A 1.5% liquid gelatinized starch instead of molasses/vinasses | B standard with molasses/vinasse | B 1.5% liquid gelatinized starch instead of molasses/vinasses | C standard with molasses/vinasse | C 1.5% liquid gelatinized starch instead of molasses/vinasse | D standard with molasses/vinasse | D 1.5% liquid gelatinized starch instead of molasses/vinasse |
|---|---|---|---|---|---|---|---|---|
| Sojahulls | 14,7 | 14,17 | 7,5 | 7,5 | 17,2 | 16,66 | 4,16 | 4,81 |
| beetpulp | 20 | 20 | 7,5 | 7,5 | 15 | 15 | 10 | 7,69 |
| Lupine | 2,68 | 2,81 | 3,89 | 5,56 | 0,9 | | 7,67 | 8,15 |
| Palmkernel | 20 | 20 | 7,5 | 7,5 | 17,5 | 17,5 | 7,4 | 7,4 |
| wheat | | 1,26 | 24,09 | 23,84 | 4,4 | 7,96 | 13,5 | 15,26 |
| Corn | 21,84 | 21,32 | 19,78 | 19,51 | 16,2 | 14,45 | 24,84 | 23,11 |
| Rapeseed treated | 7,8 | 6,03 | 8,15 | 7,01 | 2,59 | 1,31 | 12,5 | 12,28 |
| Sunflower | 1,06 | 1,45 | | | 4,75 | 1,58 | | |
| Soya CP 46% | | | 11,35 | 12,71 | 2,45 | | 6,01 | 6,28 |
| Soya treated 44% | | 0,9 | 2,59 | 2,21 | | 3,84 | | |
| Linseed treated | | | 2,45 | 2,45 | | | 1,15 | 1,23 |
| Rapeseed 35% CP | | | | | 6,65 | 10,51 | 2,45 | 2,45 |
| Protamylasse | 2,49 | 3 | | | | | | |
| Glycerol 80% | | | 2,39 | 2,23 | 3 | 3 | 2 | 2 |
| limestone | 0,85 | 0,39 | 0,4 | 0,4 | 0,48 | 0,35 | 0,24 | 0,28 |
| NaCl | 0,55 | 0,53 | 0,34 | 0,48 | | | 0,37 | 0,43 |
| Palmoil fatty acid destillate | | | 1 | 1 | | | 0,7 | 1 |
| Vit E mixture 0.1% | 0,2 | 0,2 | 0,2 | 0,2 | 0,2 | 0,2 | 0,2 | 0,2 |
| Biotine mixture 2% | 0,1 | 0,1 | 0,2 | 0,2 | 0,1 | 0,1 | 0,2 | 0,2 |
| standard premix 0.3% | 0,3 | 0,3 | 0,36 | 0,36 | 0,3 | 0,3 | 0,36 | 0,36 |
| Magnesiumoxyde Mg53 | 0,53 | 0,54 | 0,39 | 0,4 | 0,18 | 0,2 | 0,36 | 0,36 |
| Magnesium sulfate | | | | | 0,09 | 0,05 | | |
| Sodiumbicarbonaat | | | | | 1 | 1 | | |
| sugar beet melasse | 3,59 | 2,5 | 1,68 | 1,5 | 4,5 | 2 | 5,89 | 5 |
| Vinasse | 3,52 | 3 | 5,73 | 3,44 | 2,5 | 2,5 | | |
| liquid starch | | 1,5 | | 1,5 | | 1,5 | | 1,5 |
| melasse and vinasse | 7,11 | 5,5 | 7,41 | 4,94 | 7 | 4,5 | 5,89 | 5 |
| reduction melasse and vinasse | 1,61 | | 2,47 | | 2,5 | | 0,89 | |

**Comparative example 3**

In this example, animal feed pellets were prepared according to the present disclosure wherein the slurry as obtained in step c) either had

1) a water content of below 50 wt.%; or
2) a water content of between 50 and 99 wt.%.

It was found that using a slurry according to 1) leads to an undesired hardness of the animal feed pellets obtained, whereas a slurry according to 2) advantageously reduces hardness of the animal feed pellets, while also providing good durability.

**Claims**

1. A pelleting process for making an animal feed pellet, said process comprising the steps of:

a) providing a first feed fraction comprising one or more starch containing sources, and a second feed fraction;
b) milling the first feed fraction;
c) adding water to the milled first feed fraction of step (b) to obtain a slurry having a water content of between 50 and 99 wt.% with respect to the weight of the slurry;
d) optionally, adding one or more enzymes to the slurry of step (c) to at least partially degrade or hydrolyse non-starch polysaccharides contained in said milled first feed fraction;
e) heating the slurry of step (c) or (d) under conditions sufficient to allow the starch to gelatinize for a period of at most 5 minutes;
f) milling the second feed fraction;
g) optionally, adding one or more aqueous liquids and/or applying steam to the milled second feed fraction of step (f) to obtain a feed mash;
h) optionally, heating the fraction of step (f) or the mash of step (g) under conditions insufficient to gelatinize starch or denature proteins comprised in the fraction or mash;
i) mixing the slurry of step (e) with the fraction or mash of step (f), (g) or (h) to obtain a feed pellet mixture, wherein the slurry of step (e) and the milled second feed fraction of step (f), (g) or (h) are mixed in a weight ratio of slurry to milled second feed fraction of about 10:90 to about 0.5:99.5;
j) optionally, heating the feed pellet mixture of step (i) under conditions insufficient to gelatinize starch or denature proteins comprised in the mixture; and
k) subjecting the feed pellet mixture of step (i) or (j) to a pelleting device to form an animal feed pellet, wherein optionally the feed pellet mixture of step (i) or (j) is heated under conditions insufficient to gelatinize starch or denature proteins comprised in the feed pellet mixture in the pelleting device;
l) optionally, cooling the feed pellet of step (k);
m) optionally, drying the feed pellet of step (k) and/or (l);

wherein at least steps (c) to (e) are carried out independently of steps (g) to (h).

2. The process according to claim 1, wherein the starch-containing source is selected from wheat, corn, milo, rice, barley, soya, rye, spelt, oats, sorghum, potato, tapioca, tuber, legumes, cotton seed meal, flax seed meal and any mixtures thereof.

3. The process according to any of the preceding claims, wherein the second feed fraction comprises one or more feed ingredients from an animal source or a plant source.

4. The process according to claim 3, wherein the one or more feed ingredients from the plant source is selected from wheat, corn, milo, rice, beets, barley, soya, rye, spelt, oats, sorghum, legumes, cotton seed meal, flax seed meal and mixtures thereof.

5. The process according to claim 3, wherein the one or more feed ingredients from the animal source is selected from meat, meat meal, bone meal, fish meal, insects, insect meal, and any mixtures thereof.

6. The process according to any one of claims 1-2, wherein the first feed fraction and the second feed fraction comprise the same feed ingredients.

7. Process according to any one of the preceding claims, wherein the slurry in step (c) has a water content of between 55 and 95 wt.%, preferably between 60 and 90 wt.%, more preferably between 65 and 85 wt.%, most preferably between 70 and 80 wt.%, with respect to the weight of the slurry.

8. Process according to any one of the preceding claims, wherein step (e) is carried out for a period of at most 4, 3, 2, or 1 minute, preferably at most 50, 40, or 30 seconds; and/or at a temperature of from about 60 degree Celsius to about 140 degree Celsius for a period of from about 0.1 seconds to 12 seconds.

9. Process according to any one of the preceding claims, wherein step (h) is carried out at a temperature of from about 60 degree Celsius to about 140 degree Celsius for a period of from about 0.1 seconds to 12 seconds.

10. Process according to any one of the preceding claims, wherein the feed pellet mixture has a water content of at most 20, 19, 18, 17, 16 or 15 wt.%.

11. Process according to any one of the preceding claims , wherein in step (d) the one or more enzymes is selected from xylanases, beta-glucanases, pectinases, cellulases, hemicellulases.

12. Process according to any one of the preceding claims, wherein in step (j), the feed pellet mixture of step (i) is subjected to a temperature of about 60 to about 140 degrees Celsius for a period of time of about 1 to 12 seconds.

13. Process according to any one of the preceding claims , wherein in step (k), the feed pellet mixture of step (i) or (j) is subjected to a temperature of about 60 to about 140 degrees Celsius for a period of time of about 0.1 to 12 seconds.

14. Process according to any one of the preceding claims wherein the milled first feed fraction of step (b) has smaller particle size than the milled second feed fraction of step (f), preferably
wherein the milled first feed fraction of has a particle size ranging between about 0.05 mm and about 5 mm, preferably between about 2.0 mm and about 2.5 mm and wherein the milled second feed fraction has a particle size ranging between about 0.5 and about 6 mm, preferably between about 3.0 mm and about 4.0 mm.

15. Process according to any one of the preceding claims, wherein the animal is selected from ruminants, swine, and poultry, preferably wherein the animal is a ruminant selected from bovine, ovine and caprine, preferably bovine.

**Patentansprüche**

1. Pelletierverfahren zum Herstellen eines Tierfutterpellets, wobei das Verfahren folgende Schritte umfasst:

   a) Bereitstellen einer ersten Futterfraktion, die eine oder mehrere Stärke enthaltende Quellen und eine zweite Futterfraktion umfasst;
   b) Mahlen der ersten Futterfraktion;
   c) Beigeben von Wasser zu der gemahlenen ersten Futterfraktion aus Schritt (b), um eine wässrige Mischung zu erhalten, die einen Wassergehalt von zwischen 50 und 99 Gew.-% in Bezug auf das Gewicht der wässrigen Mischung aufweist;
   d) Optional, Beigeben von einem oder mehreren Enzymen zu der wässrigen Mischung aus Schritt (c), um in der gemahlenen ersten Futterfraktion enthaltene Nicht-Stärke-Polysaccharide zumindest teilweise abzubauen oder zu hydrolysieren;
   e) Erhitzen der wässrigen Mischung aus Schritt (c) oder (d) unter Bedingungen, die ausreichend sind, damit die Stärke während einer Zeitspanne von höchstens 5 Minuten gelatinieren kann;
   f) Mahlen der zweiten Futterfraktion;
   g) Optional, Beigeben von einer oder mehreren wässrigen Flüssigkeiten und/oder Auftragen von Dampf auf die gemahlene zweite Futterfraktion aus Schritt (f), um einen Futterbrei zu erhalten;
   h) Optional, Erhitzen der Fraktion aus Schritt (f) oder des Breis aus Schritt (g) unter Bedingungen, die unzureichend sind, um Stärke zu gelatinieren oder in der Fraktion oder dem Brei enthaltene Proteine zu denaturieren;
   i) Vermischen der wässrigen Mischung aus Schritt (e) mit der Fraktion oder dem Brei aus Schritt (f), (g) oder (h), um eine Futterpelletmischung zu erhalten, wobei die wässrige Mischung aus Schritt (e) und die gemahlene zweite Futterfraktion aus Schritt (f), (g) oder (h) in einem Gewichtsverhältnis von wässrige Mischung zu gemahlener zweiter Futterfraktion von ungefähr 10:90 bis ungefähr 0,5:99,5 vermischt werden;

j) Optional, Erhitzen der Futterpelletmischung aus Schritt (i) unter Bedingungen, die unzureichend sind, um Stärke zu gelatinieren oder in der Mischung enthaltene Proteine zu denaturieren; und

k) Aussetzen der Futterpelletmischung aus Schritt (i) oder (j) einer Pelletiervorrichtung, um ein Tierfutterpellet zu formen, wobei die Futterpelletmischung aus Schritt (i) oder (j) optional unter Bedingungen erhitzt wird, die unzureichend sind, um Stärke zu gelatinieren oder in der Futterpelletmischung enthaltene Proteine in der Pelletiervorrichtung zu denaturieren;

l) Optional, Abkühlen des Futterpellets aus Schritt (k);

m) Optional, Trocknen des Futterpellets aus Schritt (k) und/oder (l);

wobei zumindest die Schritte (c) bis (e) unabhängig von den Schritten (g) bis (h) ausgeführt werden.

2. Verfahren nach Anspruch 1, wobei die Stärke enthaltende Quelle ausgewählt ist aus Weizen, Mais, Milo, Reis, Gerste, Soja, Roggen, Dinkel, Hafer, Sorghum, Kartoffel, Tapioka, Knollen, Hülsenfrüchten, Baumwollsamenmehl, Flachssamenmehl und jeder Mischung daraus.

3. Verfahren nach einem der vorstehenden Ansprüche, wobei die zweite Futterfraktion eine oder mehrere Futterzutaten aus einer tierischen Quelle oder einer pflanzlichen Quelle umfasst.

4. Verfahren nach Anspruch 3, wobei die eine oder die mehreren Futterzutaten aus der pflanzlichen Quelle ausgewählt sind aus Weizen, Mais, Milo, Reis, Rüben, Gerste, Soja, Roggen, Dinkel, Hafer, Sorghum, Hülsenfrüchten, Baumwollsamenmehl, Flachssamenmehl und Mischungen daraus.

5. Verfahren nach Anspruch 3, wobei die eine oder die mehreren Futterzutaten aus der tierischen Quelle ausgewählt sind aus Fleisch, Fleischmehl, Knochenmehl, Fischmehl, Insekten, Insektenmehl und jeder Mischung daraus.

6. Verfahren nach einem der Ansprüche 1 - 2, wobei die erste Futterfraktion und die zweite Futterfraktion die gleichen Futterzutaten umfassen.

7. Verfahren nach einem der vorstehenden Ansprüche, wobei die wässrige Mischung in Schritt (c) einen Wassergehalt von zwischen 55 und 95 Gew.-%, vorzugsweise zwischen 60 und 90 Gew.-%, besonders bevorzugterweise zwischen 65 und 85 Gew.-%, am meisten vorzugsweise zwischen 70 und 80 Gew.-% in Bezug auf das Gewicht der wässrigen Mischung aufweist.

8. Verfahren nach einem der vorstehenden Ansprüche, wobei Schritt (e) während einer Zeitspannen von höchstens 4, 3, 2, oder 1 Minute, vorzugsweise höchstens 50, 40, oder 30 Sekunden; und/oder bei einer Temperatur von ungefähr 60 Grad Celsius bis ungefähr 140 Grad Celsius über eine Zeitspannen von ungefähr 0,1 Sekunden bis 12 Sekunden ausgeführt wird.

9. Verfahren nach einem der vorstehenden Ansprüche, wobei Schritt (h) bei einer Temperatur von ungefähr 60 Grad Celsius bis ungefähr 140 Grad Celsius über eine Zeitspanne von ungefähr 0,1 Sekunden bis 12 Sekunden ausgeführt wird.

10. Verfahren nach einem der vorstehenden Ansprüche, wobei die Futterpelletmischung einen Wassergehalt von höchstens 20, 19, 18, 17, 16 oder 15 Gew.-% aufweist.

11. Verfahren nach einem der vorstehenden Ansprüche, wobei in Schritt (d) das eine oder die mehreren Enzyme ausgewählt sind aus Xylanasen, Beta-Glucanasen, Pectinasen, Cellulasen, Hemicellulasen.

12. Verfahren nach einem der vorstehenden Ansprüche, wobei in Schritt (j) die Futterpelletmischung aus Schritt (i) einer Temperatur von ungefähr 60 bis ungefähr 140 Grad Celsius über eine Zeitspanne von ungefähr 1 bis 12 Sekunden ausgesetzt wird.

13. Verfahren nach einem der vorstehenden Ansprüche, wobei in Schritt (k) die Futterpelletmischung aus Schritt (i) oder (j) einer Temperatur von ungefähr 60 bis ungefähr 140 Grad Celsius über eine Zeitspanne von ungefähr 0,1 bis 12 Sekunden ausgesetzt wird.

14. Verfahren nach einem der vorstehenden Ansprüche, wobei die gemahlene erste Futterfraktion aus Schritt (b) eine kleinere Partikelgröße aufweist als die gemahlene zweite Futterfraktion aus Schritt (f),
wobei vorzugsweise die gemahlene erste Futterfraktion eine Partikelgröße im Bereich zwischen ungefähr 0,05 mm und ungefähr 5 mm, vorzugsweise zwischen ungefähr 2,0 mm und ungefähr 2,5 mm aufweist, und wobei die gemahlene zweite Futterfraktion eine Partikelgröße im Bereich zwischen ungefähr 0,5 und ungefähr 6 mm, vorzugsweise zwischen ungefähr 3,0 mm und ungefähr 4,0 mm aufweist.

15. Verfahren nach einem der vorstehenden Ansprüche, wobei das Tier ausgewählt wird aus Wiederkäuern, Schwein und Geflügel, wobei das Tier vorzugsweise ein Wiederkäuer ist, ausgewählt aus Rind, Schaf und Ziege, vorzugsweise Rind.

**Revendications**

1. Un procédé de pelletisation pour la fabrication d'un granulé alimentaire pour animal, ledit procédé comprenant les étapes suivantes :

   a) la fourniture d'une première fraction alimentaire comprenant une ou plusieurs sources contenant de l'amidon, et d'une seconde fraction alimentaire ;
   b) le broyage de la première fraction alimentaire ;
   c) l'ajout d'eau à la première fraction alimentaire broyée de l'étape (b) pour obtenir une suspension ayant une teneur en eau comprise entre 50 et 99 % en poids par rapport au poids de la suspension ;
   d) éventuellement, l'ajout d'une ou plusieurs enzymes à la suspension de l'étape (c) pour dégrader ou hydrolyser au moins partiellement des polysaccharides non amylacés contenus dans ladite première fraction alimentaire broyée ;
   e) le chauffage de la suspension de l'étape (c) ou (d) dans des conditions suffisantes pour permettre à l'amidon de gélatiniser pendant une période de 5 minutes au maximum ;
   f) le broyage de la deuxième fraction alimentaire ;
   g) éventuellement, l'ajout de un ou plusieurs liquides aqueux et/ou l'application de vapeur à la seconde fraction alimentaire broyée de l'étape (f) pour obtenir une purée alimentaire ;
   h) éventuellement, le chauffage de la fraction de l'étape (f) ou de la purée de l'étape (g) dans des conditions insuffisantes pour gélatiniser l'amidon ou dénaturer des protéines comprises dans la fraction ou la purée ;
   i) le mélange de la suspension de l'étape (e) avec la fraction ou la purée de l'étape (f), (g) ou (h) pour obtenir un mélange de granulés alimentaires, dans lequel la suspension de l'étape (e) et la seconde fraction alimentaire broyée à l'étape (f), (g) ou (h) sont mélangées dans un rapport pondéral de la suspension à la seconde fraction alimentaire broyée d'environ 10:90 à environ 0,5:99,5 ;
   j) éventuellement, le chauffage du mélange de granulés alimentaires de l'étape (i) dans des conditions insuffisantes pour gélatiniser l'amidon ou dénaturer des protéines comprises dans le mélange ; et
   k) la soumission du mélange de granulés alimentaires de l'étape (i) ou (j) à un dispositif de pelletisation pour former un granulé alimentaire pour animal, dans lequel, éventuellement, le mélange de granulés alimentaires de l'étape (i) ou (j) est chauffé dans des conditions insuffisantes pour gélatiniser l'amidon ou dénaturer des protéines comprises dans le mélange de granulés alimentaires dans le dispositif de pelletisation ;
   l) éventuellement, le refroidissement du granulé alimentaire de l'étape (k) ;
   m) éventuellement, le séchage du granulé alimentaire de l'étape (k) et/ou (l) ;

   dans lequel au moins les étapes (c) à (e) sont réalisées indépendamment des étapes (g) à (h).

2. Procédé selon la revendication 1, dans lequel la source contenant de l'amidon est choisie parmi le blé, le maïs, le milo, le riz, l'orge, le soja, le seigle, l'épeautre, l'avoine, le sorgho, la pomme de terre, le tapioca, le tubercule, les légumineuses, la farine de graines de coton, la farine de graines de lin et tous mélanges de ceux-ci.

3. Procédé selon l'une des revendications précédentes, dans lequel la seconde fraction alimentaire comprend un ou plusieurs ingrédients alimentaires de source animale ou végétale.

4. Procédé selon la revendication 3, dans lequel le ou les ingrédients alimentaires de source végétale sont choisis parmi le blé, le maïs, le milo, le riz, les betteraves, l'orge, le soja, le seigle, l'épeautre, l'avoine, le sorgho, les légumineuses, la farine de graines de coton, la farine de graines de lin et leurs mélanges.

5. Procédé selon la revendication 3, dans lequel le ou les ingrédients alimentaires d'origine animale sont choisis parmi la viande, la farine de viande, la farine d'os, la farine de poisson, les insectes, la farine d'insectes et tous mélanges de ceux-ci.

6. Procédé selon l'une quelconque des revendications 1 à 2, dans lequel la première fraction alimentaire et la deuxième fraction alimentaire comprennent les mêmes ingrédients d'aliments.

7. Procédé selon l'une quelconque des revendications précédentes, dans lequel la suspension de l'étape (c) a une teneur en eau comprise entre 55 et 95 % en poids, de préférence entre 60 et 90 % en poids, plus préférablement entre 65 et 85 % en poids, de préférence entre 70 et 80 % en poids, par rapport au poids de la suspension.

8. Procédé selon l'une quelconque des revendications précédentes, dans lequel l'étape (e) est effectuée pendant une période d'au plus 4, 3, 2 ou 1 minute, de préférence d'au plus 50, 40 ou 30 secondes ; et/ou à une température d'environ 60 degrés Celsius à environ 140 degrés Celsius pendant une période d'environ 0,1 seconde à 12 secondes.

9. Procédé selon l'une quelconque des revendications précédentes, dans lequel l'étape (h) est réalisée à une température d'environ 60 degrés Celsius à environ 140 degrés Celsius pendant une période d'environ 0,1 seconde à 12 secondes.

10. Procédé selon l'une quelconque des revendications précédentes, dans lequel, le mélange de granulés alimentaires a une teneur en eau d'au plus 20, 19, 18, 17, 16 ou 15 % en poids.

11. Procédé selon l'une quelconque des revendications précédentes, dans lequel, à l'étape (d), l'une ou plusieurs enzymes sont choisies parmi les xylanases, les bêta-glucanases, les pectinases, les cellulases, les hémicellulases.

12. Procédé selon l'une quelconque des revendications précédentes, dans lequel, dans l'étape (j), le mélange de granulés alimentaires de l'étape (i) est soumis à une température d'environ 60 à environ 140 degrés Celsius pendant une période de temps d'environ 1 à 12 secondes.

13. Procédé selon l'une quelconque des revendications précédentes, dans lequel, à l'étape (k), le mélange de granulés alimentaires de l'étape (i) ou (j) est soumis à une température d'environ 60 à environ 140 degrés Celsius pendant une période de temps d'environ 0,1 à 12 secondes.

14. Procédé selon l'une quelconque des revendications précédentes, dans lequel la première fraction alimentaire broyée de l'étape (b) a une taille de particules plus petite que la deuxième fraction alimentaire broyée de l'étape (f), de préférence dans lequel la première fraction alimentaire broyée a une taille de particules comprise entre environ 0,05 mm et environ 5 mm, de préférence entre environ 2,0 mm et environ 2,5 mm, et dans lequel la deuxième fraction alimentaire broyée a une taille de particules comprise entre environ 0,5 et environ 6 mm, de préférence entre environ 3,0 mm et environ 4,0 mm.

15. Procédé selon l'une des revendications précédentes, dans lequel l'animal est sélectionné parmi les ruminants, les porcs et la volaille, de préférence dans lequel l'animal est un ruminant choisi parmi les bovins, les ovins et les caprins, de préférence les bovins.

## REFERENCES CITED IN THE DESCRIPTION

**Patent documents cited in the description**

- US 20091297664 A
- US 3420671 A

- EP 0120573 A


**Non-patent literature cited in the description**

- **LOWE et al.** *Feed Tech.,* 2005, vol. 9 (2), 15-19
- **PFOST et al.** A Standard Method of Measuring Pellet Quality. *Proceedings of the 1962 Feed Production School sponsored by the Midwest Feed Manufacturers Association,* 1962
- **YOUNG et al.** *ASAE Standard S269.1,* 1969
- *American Society of Agricultural and Biological Engineers as ASAE Standard S269.5,* 2012
- **STARK ; FAHRENHOLZ.** Kansas State University Agricultural Experiment Station and Cooperative Extension Service. *K-State research and extension,* July 2015

- ASAE. 2012. Densified Products for Bulk Handling - Definitions and Method. ASAE Standard S269.5. American Society of Agricultural and Biological Engineers, 91
- Determining the degree of starch gelatinization. **SHETTY et al.** the 57th annual meeting, contribution 822. Department of grain science and industry, 1972, 66506
- **CHIANG ; JOHNSON.** *Cereal Chem,* 1977, vol. 54 (3), 429-435
- **CHRISTOPHER BUCKE.** *Carbohydrate biotechnology protocols,* 1999
- **CHIANG ; JOHNSON.** *Cereal Chem.,* 1977, vol. 54 (3), 429-435